# EUROPEAN PATENT APPLICATION

(11) **EP 2 189 308 A1**
(43) Date of publication of application: **26.05.2010**
(21) Application number: 08765104.8
(22) Date of filing: 04.06.2008
(51) Int. Cl.: B60G 3/20, B60B 35/14, B60G 7/02, B62D 7/18

(54) **WORK VEHICLE**

(30) Priority: 12.09.2007 JP 2007236472
(71) Applicant: Yanmar Co. Ltd., Osaka-shi, Osaka 530-0013 (JP)
(72) Inventor: EGAWA, Fumihiro, Osaka-shi Osaka 530-0013 (JP); INANAGA, Masashi, Osaka-shi Osaka 530-0013 (JP)
(74) Representative: Hering, Hartmut
(86) International application number: PCT/JP2008/060291
(87) International publication number: WO 2009/034754

(57) **Abstract**

A front wheel drive shaft is connected to a sun gears disposed at the center of the front wheel. The front wheel is rotated by rotating a ring gear disposed on the outer periphery of planetary gears through a plurality of planetary gears disposed on the outer periphery of the sun gear. Stays provided at the upper and lower ends of the steering knuckle in the front wheel are connected to the outer ends of upper and lower suspension arms respectively through spherical joints. The right and left front wheels are so provided on a work vehicle that those front wheels are capable of steering and can be separately swung in the vertical direction of the vehicle.

## Description

### TECHNICAL FIELD

The present invention relates to a work vehicle which is provided with a front wheel being rotated by a front wheel drive shaft which is protrusively mounted from the inside of a front axle case in the front part of the vehicle to the right and the left and interposed the universal shaft couplings respectively adjacent to the outer side and the inner side of the vehicle, and the upper and lower suspension arms, which are located respectively between this front wheel and the front axle case and support so as to enable the front wheels mounted at the upper side and at the lower side of said front wheel drive shaft to swing in the vertical direction of the vehicle, and in more detail, relates to a work vehicle provided with the front wheels which are capable of steering and can be separately swung in the vertical direction of the vehicle.

### BACKGROUND ART

As one example of a conventional work vehicle, for example, a wheel-type tractor (Patent Document 1) is cited wherein power to front wheels is transmitted to a differential gear in a front axle case through a transmission shaft to a front wheel drive output shaft protruded from the front part of a mission case, and the front wheels are driven by the differential gear through a front drive shaft, and at the same time, a double wishbone type front suspension supporting the front wheels rotatably in the vertical direction of the vehicle through spherical joints located at the ends of the upper and the lower arms mounted pivotally on the right and left sides of the front axle case are so provided that the front wheels can be swung in the vertical direction of the vehicle, and also another wheel tractor (Patent Document 2) is cited, wherein the double wishbone type front suspension is provided and the front drive shaft is capable of responding to a large working angle of a steering wheel by providing universal shaft couplings in the middle part of the right and left front wheel drive shafts respectively.

Patent Document 1: JP-A-2002-137613
Patent Document 2: JP-A-2000-25474

### DISCLOSURE OF INVENTION

### PROBLEM TO BE SOLVED BY THE INVENTION

However, such a front suspension of a wheel-type tractor described in Patent Document 1 had problems of risk of turnover of a vehicle, impossibility of stable running and high-speed running, and poor travelling performance, for example, because, depending on road surface conditions of travelling road including irregularities and obstacles on a road, when the front wheels are swung in the upper direction of a vehicle, the adjacent part of the center of a front wheel drive shaft becomes a supporting point of rotation, and when one front wheel is swung in the upper direction of a vehicle, the other front wheel is also swung simultaneously in the lower direction of the vehicle and the vehicle inclines. In addition, a front suspension for a wheel-type tractor according to Patent Document 2 causes also the same problem as described above and further had problems that the construction is complicated and the workability such as maintenance work is reduced because a supporting member supporting an intermediate shaft located between universal shaft couplings respectively provided on the right and left portions of a front wheel drive shaft, has to be provided separately in a small space.
Therefore, it is an object of the present invention to provide a work vehicle, wherein the front wheels are so provided that those front wheels are capable of steering and can be swung separately in the vertical direction of the vehicle, and the front suspension construction is made simple and travelling performance and workability are improved.

### MEANS FOR SOLVING THE PROBLEM

Hence, the invention according to claim 1, in a work vehicle provided with the front wheels being rotated by front wheel drive shafts which are protrusively mounted from the inside of a front axle case in the front part of the vehicle to the right and the left and interposed the universal shaft couplings respectively adjacent to the outer side and the inner side of the vehicle, and the upper and lower suspension arms, which are located respectively between the front wheel and the front axle case and support so as to enable the front wheels mounted at the upper side and at the lower side of the front wheel drive shaft to swing in the vertical direction of the vehicle, **characterized in that,**
the front wheel drive shaft is connected with sun gears disposed at the center of the front wheels; the front wheels are rotated by rotating a ring gear disposed on the outer periphery of planetary gears through a plural of planetary gears disposed on the outer periphery of the sun gears; as well as stays provided at the upper end and the lower ends of a steering knuckle of the front wheel are connected respectively with the outer ends of the upper and lower suspension arms through spherical joints; and the front wheels are so provided that the front wheels are capable of steering and can be separately swung in the vertical direction of the vehicle.

The present invention according to claim 2 is **characterized in that,** in the work vehicle according to claim 1, the universal shaft coupling provided adjacent to the outer side of the vehicle is comprised of a bent member with a supporting part built in.

The present invention according to claim 3 is **characterized in that,** in the work vehicle according to claim 1, the spherical joint is detachably provided.

### ADVANTAGES OF THE INVENTION

According to the invention according to claim 1, in a work vehicle provided with front wheels being rotated by front wheel drive shafts which are protrusively mounted to the right and the left from the inside of a front axle case in the front part of the vehicle and interposed universal shaft couplings respectively adjacent to the outer side and the inner side of the vehicle, and the upper and lower suspension arms, which are located respectively between the front wheel and the front axle case, and are mounted at the upper side and at the lower side of the front wheel drive shaft, support the front wheels so as to enable the front wheels to swing in the vertical direction of the vehicle,
because the front wheel drive shaft is connected with sun gears disposed at the center of the front wheel, the front wheel is rotated by rotating a ring gear disposed on the outer periphery of a plural of planetary gears through the planetary gears disposed on the outer periphery of the sun gears, and stays provided at the upper end and the lower ends of a steering knuckle of the front wheel are connected respectively with the outer ends of the upper and lower suspension arms through spherical joints, by driving the sun gears with driving force transmitted effectively from an engine by directly connecting the front drive shaft with the front wheel, each gear is sequentially rotated and it is possible to drive more effectively the weighty front wheels of the vehicle. That is, since it is not required to interpose a bevel gear, a vertical shaft, a pinion and the like, it is possible to effectively transmit driving force from an engine to the front wheels through the front wheel drive shafts. Furthermore, because it is not required to provide a fixed case in which a bevel gear, a vertical shaft, a pinion and the like are internally installed, assembling and maintenance at the periphery of the front drive shaft can be done easily. And, even when the front wheels are swung in the vertical direction of the vehicle due to road surface conditions, the right and left front wheels can be swung in the same direction, the vehicle can be prevented from inclining and it is possible to stabilize the vehicle. Accordingly, it is possible to provide a work vehicle with enhanced travelling performance and workability.

According to the present invention according to claim 2, because a universal shaft coupling provided adjacent to the outer side of a vehicle is comprised of a bent member with a supporting part stored inside, it is possible to support a front wheel drive shaft provided between universal shaft couplings provided adjacent to the outer side and the inner side of the vehicle, by the supporting part in the bent member, without supporting by a complicated construction using a different member in a small space, and front suspension construction can be compact and also work including its assembly and maintenance can be performed easily. Accordingly, it is possible to provide a work vehicle with enhanced workability.

According to the present invention according to claim 3, because a spherical joint is detachably provided, adjustment of kingpin angle and maintenance of a front suspension can be performed easily. Accordingly, it is possible to provide a work vehicle with enhanced workability of maintenance.

### BRIEF DESCRIPTION OF THE DRAWINGS

[Fig. 1] Fig. 1 is a left-hand side view showing a wheel type tractor as one example of the present invention.
[Fig. 2] Fig. 2 is a plan view a wheel type tractor.
[Fig. 3] Fig. 3 is a skeleton drawing of a power transmission system.
[Fig. 4] Fig. 4 is a cross-sectional development view of the inside of a mission case.
[Fig. 5] Fig. 5 is a front elevation view showing a suspension between the right and left front wheels.
[Fig. 6] Fig. 6 is a plan view showing a suspension between the right and left front wheels.
[Fig. 7] Fig. 7 is an enlarged perspective view looking at a suspension of the right front wheel from its bottom.
[Fig. 8] Fig. 8 is a front elevation schematic view showing the neighborhood of a suspension of the left front wheel.
[Fig. 9] Fig. 9 is a front elevation perspective view showing the inner construction of a bent member in an enlarged manner.
[Fig. 10] Fig. 10 is a side-elevation schematic view showing a construction in a supporting case.

### DSCRIPTION OF REFERENCE NUMERALS

- 19: front axle case
- 23: front wheel
- 100: suspension
- 101: front wheel drive shaft
- 102a and 102b: rotation shaft
- 103: supporting case
- 104: steering knuckle
- 104a, 104b, 114b, and 114c: stay
- 105a and 105b: suspension arm
- 106a and 106b: spherical joint
- 107a: fixing part
- 107b: mounting member
- 108 and 110: universal shaft coupling
- 109: intermediate shaft
- 111: transmission shaft
- 112 and 113: arm
- 114: supporting part
- 115: elastic member

### BEST MODE FOR CARRYING OUT THE INVENTION

Best mode for carrying out the present invention will be described below in detail with referring to drawings.

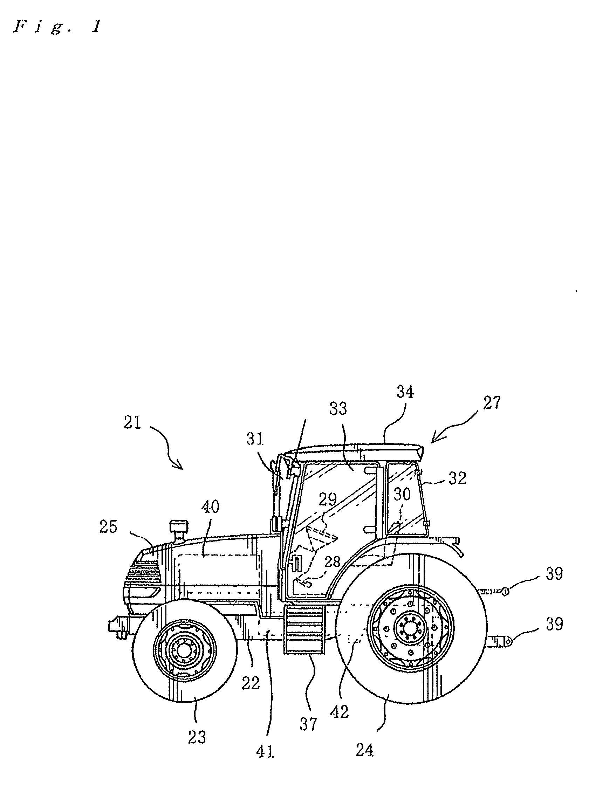

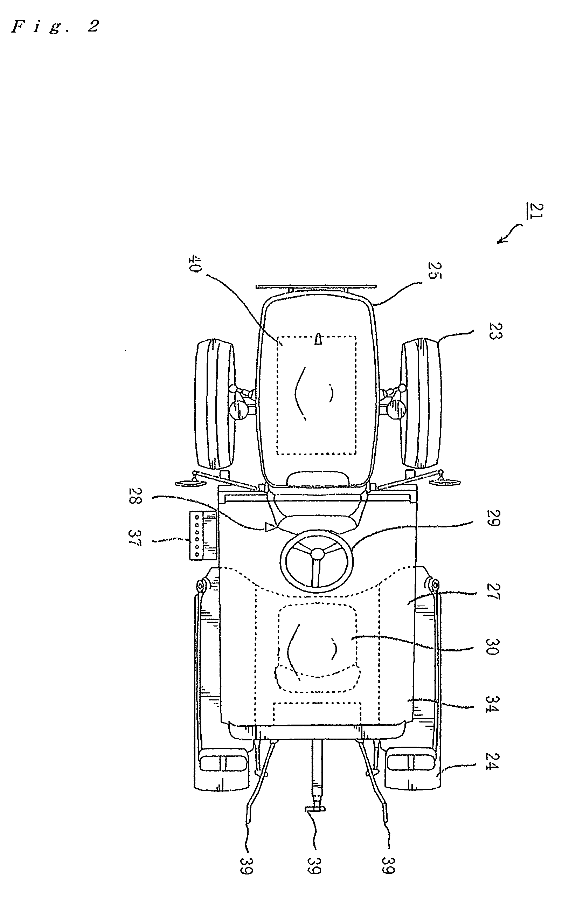

Fig. 1 is a side view of a wheel type tractor as one example of the present invention, and Fig. 2 shows a plan view of the same tractor. In a tractor 21 of this example, front wheels 23 and rear wheels 24 are provided in front and at the back of a vehicle frame 22, a bonnet 25 is formed above the front wheel 23, an engine 40 as a motor is disposed inside it, a clutch housing 41 is disposed at the back of the engine 40, further a mission case 42 is disposed at the back of this clutch housing 41, and power from the engine 40 is transmitted to the front wheels 23 and the rear wheels 24. And, a cabin 27 (ROPS specification is also acceptable) is provided in series at the back of the bonnet 25. It should be noted that, the direction used in the description including back/front, right/left, and upper/lower is indicated as based on the travelling direction of a vehicle.

Inside the cabin 27, an engine key, a gas pedal, a clutch pedal, an operation pedal such as the clutch pedal 28, a steering wheel 29, a driver' s seat 30 and the like are provided as a vehicle handling part. On the outer periphery of the cabin 27, a wind shield 31, a rear window 32, a door 33, a roof 34 and the like may be respectively provided. In addition, up/down steps 37 for an operator to get on and off the cabin 27 are fixedly mounted on a vehicle frame 22 at the lower part of the cabin 27.

Thus, the power from the engine 40 is transmitted to a PTO shaft, not shown, protruded from the rear end of the mission case 42, this PTO shaft drives a working machinery, not shown, mounted at the vehicle rear end, through a universal joint, a working machinery mounting device 39 and the like, which are not shown.

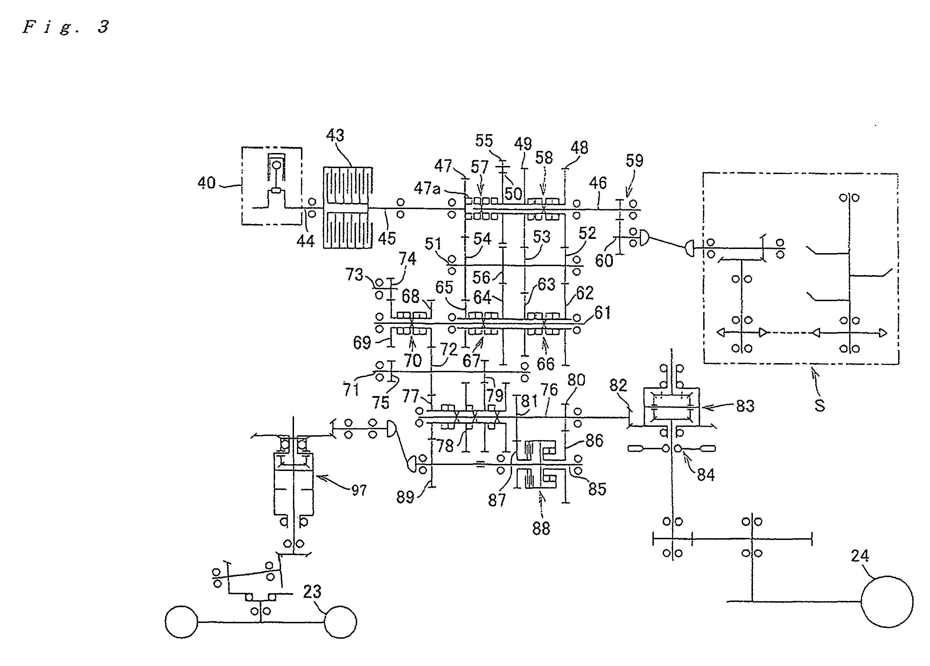

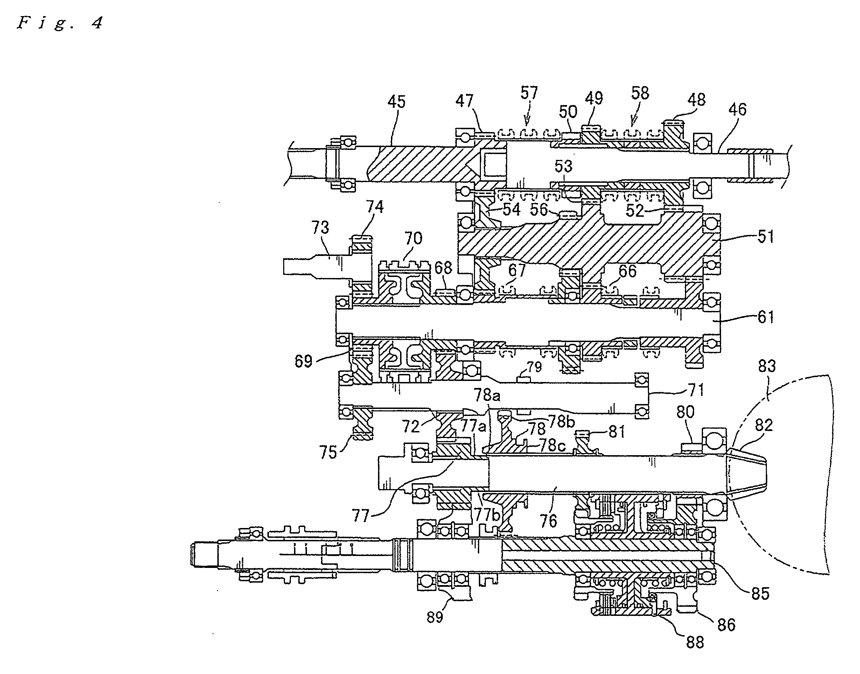

Next, the construction of power transmission will be explained. Fig. 3 is a skeleton drawing of a power transmission system and Fig. 4 is a cross-sectional development view of the inside of a mission case. As shown in Figs. 3 and 4, a multiple disc type main clutch 43 is housed in the clutch housing 41, which is coordinated with the clutch pedal 28. In addition, rotation of an output shaft 44 of the engine 40 is input to the main clutch 43, an output shaft 45 of the main clutch 43 is protruded toward the vehicle rear part and provided at the same shaft center with that of a PTO clutch shaft 46.

A power transmission gear 47 and a PTO third-speed click 47a are disposed at the rear end of an output shaft 45 and a PTO first-speed gear 48, a PTO second-speed gear 49 and a PTO reverse gear 50 are respectively loosely fit on the PTO clutch shaft 46. And, a PTO first-speed gear 48, a PTO second-speed gear 49 and the power transmission gear 47 are respectively engaged with transmission gears 52, 53 and 54 mounted on a main shaft 51, the PTO reverse gear 50 is engaged with a transmission gear 56 through a counter gear 55, and rotation driving force is transmitted by sliding of PTO clutch sliders 57 and 58 to a PTO shaft 60 from the transmission gears 52, 53 and 56, and the PTO third-speed click 47a through a PTO clutch shaft 46 and a speed reduction gear 59, and the working machinery s is driven.

Transmission gears 52, 53, 54 and 56 fixedly mounted on the main shaft 51, are respectively engaged with a main speed-change first gear 62, a main speed-change second gear 63, a main speed-change third gear 64, a main speed-change fourth gear 65, which are loosely fit on a main speed-change shaft 61. Two main speed-change clutch sliders 66 and 67 which are spline-fitted so as to allow sliding in the axial direction of this main speed-change shaft 61, are coordinated with a main speed-change lever, not shown, provided in the cabin 27. By operating this main speed-change lever, engagement between the main speed-change clutch sliders 66 and 67 and a click formed respectively on the main speed-change first gear 62, the main speed-change second gear 63, the main speed-change third gear 64, the main speed-change fourth gear 65 is selected, and power is transmitted from the main shaft 51 to the main speed-change shaft 61 through any one selected from the main speed-change gears 62, 63, 64 and 65.

In addition, at the front extended part of the main speed-change shaft 61 in the vehicle movement direction, a positive rotation side gear 68 and a reverse rotation side gear 69 are respectively loosely fit on the same shaft center. And, by operating a reversal lever, not shown, provided in the cabin 27, a reversal clutch 70 is selected and connected either in the forward movement side or the backward movement side, the rotation of the main speed-change shaft 61 is transmitted to either the positive rotation side gear 68 or the reverse rotation side gear 69. However, in the case that the reversal lever is in the neutral position, the rotation is transmitted to neither the positive rotation side gear 68 nor a reverse rotation side gear 69.

The positive rotation side gear 68 and the reverse rotation side gear 69 are engaged respectively with a gear 72 fitted on a transmission shaft 71 and a counter gear 74 fitted on a counter shaft 73, and this counter gear 74 is engaged with a gear 75 fitted on the transmission shaft 71.

Consequently, when the reversal clutch 70 is connected to the forward movement side, the rotation power of the main speed-change shaft 61 is transmitted to the transmission shaft 71 through the positive rotation side gear 68, and when the reversal clutch 70 is connected to the backward movement side, the rotation power of the main speed-change shaft 61 enables the transmission shaft 71 to rotate reversely from the reverse rotation side gear 69 through the counter shaft 73.

The gear 72 fitted on the transmission shaft 71 is engaged with the positive rotation side gear 68, and is engaged, as well, with a gear 77 mounted on the same shaft center line with that of an auxiliary speed-change shaft 76 and at the front part in the vehicle movement direction. Since an auxiliary speed-change shifter 78 is fitted on the auxiliary speed-change shaft 76, it is enabled to slide freely between the front part of the auxiliary speed-change shaft 76 and the rear part of the gear 77.

This auxiliary speed-change shifter 78 is operated by an auxiliary speed-change lever, not shown, provided in the cabin 27, and an auxiliary speed-change device is so constructed that it is possible to switch over to any one of a state of auxiliary speed-change third speed (auxiliary speed-change high-speed stage), wherein a auxiliary speed-change shifter teeth 78a formed at the front part of the auxiliary speed-change shifter 78 is positioned at the rear position 77a of the gear 77,
a state of auxiliary speed-change second speed, wherein the auxiliary speed-change shifter teeth 78a is engaged with teeth 77b mounted at the rear end of the gear 77,
a state of auxiliary speed-change first speed, wherein teeth 78b formed at the center upper part of the auxiliary speed-change shifter 78 is engaged with a gear 79 mounted adjacent to the center of the transmission shaft 71,
a (neutral) state, wherein the rotation power is not transmitted to the auxiliary speed-change shifter 78,
and
a state of auxiliary speed-change hyperslow speed (C speed), wherein teeth 78c at the rear part of the auxiliary speed-change shifter 78, is engaged with a gear (not shown) for hyperslow speed.

When gear engagement is selected by sliding of the auxiliary speed-change shifter 78, rotation of the transmission shaft 71 is output through three stage speed-change, and the rotation power input to the auxiliary speed-change shaft 76, is output to two directions of a rear wheel driving system and a front wheel driving system, by three gears 80, 81 and 82 and the like mounted on the auxiliary speed-change shaft 76.

A rear wheel differential device 83 is disposed at the rear part of a mission case 42, and rotation of the auxiliary speed-change shaft 76 is input to the rear wheel differential device 83 through the gear 82 formed at the rear end of this auxiliary speed-change shaft 76, and rear wheels 24 are driven through a wheel shaft 18 and the like. In addition, reference numeral 84 is a brake device.

In addition, by gears 80 or 81 mounted on the auxiliary speed-change shaft 76, rotation power being input from a standard drive input gear 86 loosely fit on a front wheel output shaft 85, or an acceleration drive input gear 87, to the front wheel output shaft 85 through 4 wheel drive-front wheel acceleration drive switch system 88, is input to a front wheel side differential device 97 through a front wheel transmission shaft 89 connected with the front end of this front wheel output shaft 85, and front wheels 23 are driven through a front wheel drive shaft 101 protruded in the right and the left directions from a front axle case 19 fixedly mounted on a side frame, not shown, in which the differential device 97 is mounted. It should be noted that, though the description above is explained about a 4 wheel drive tractor 21, a front drive work vehicle is also acceptable.

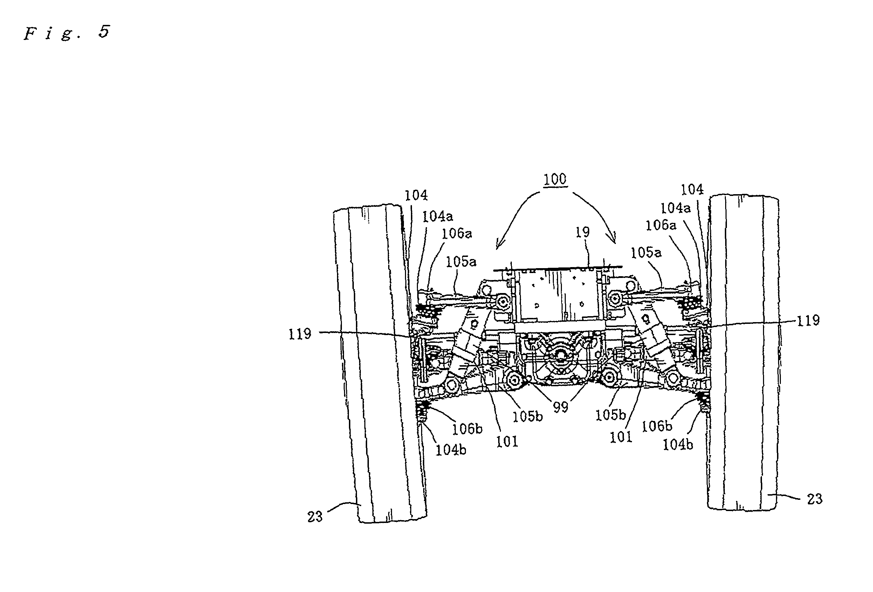

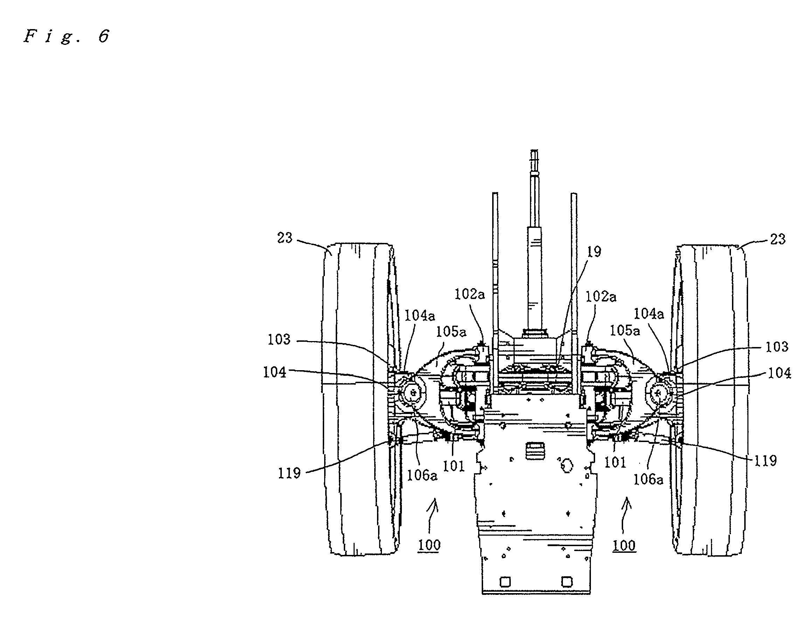

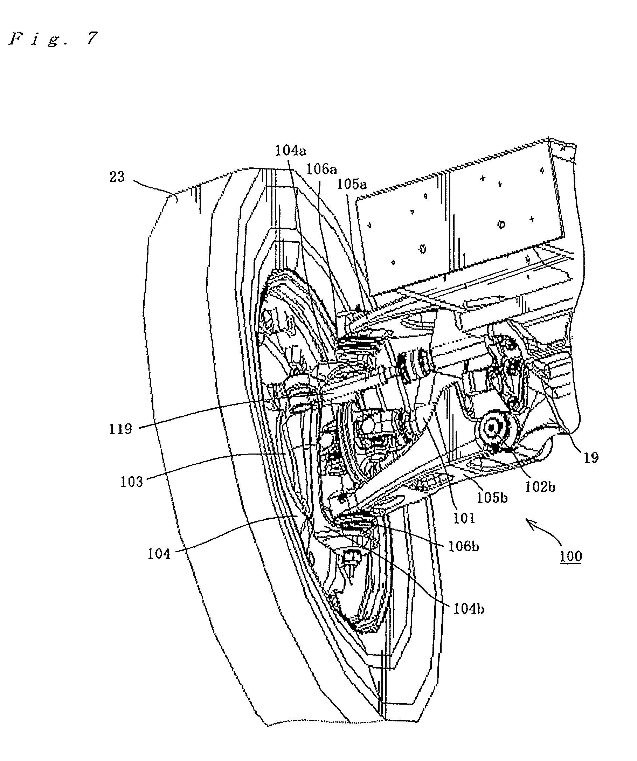

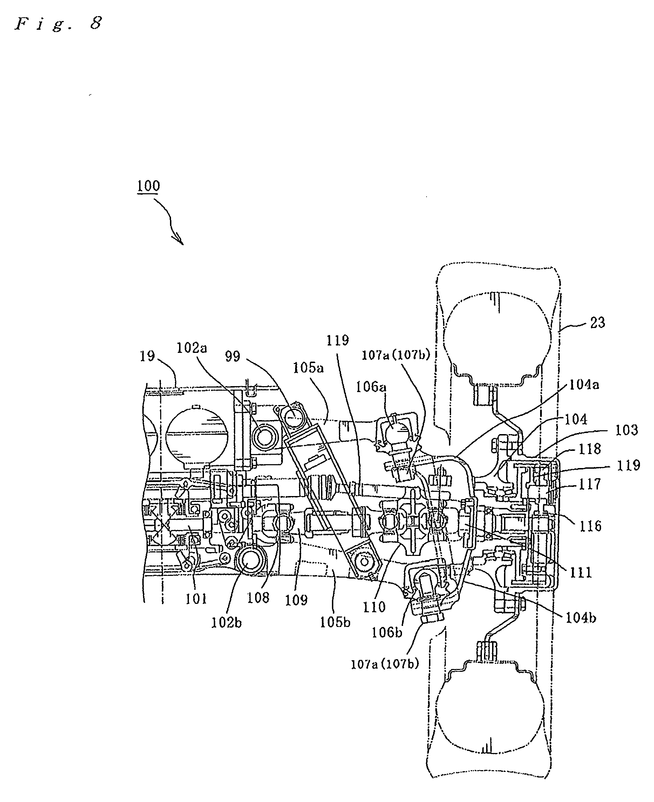

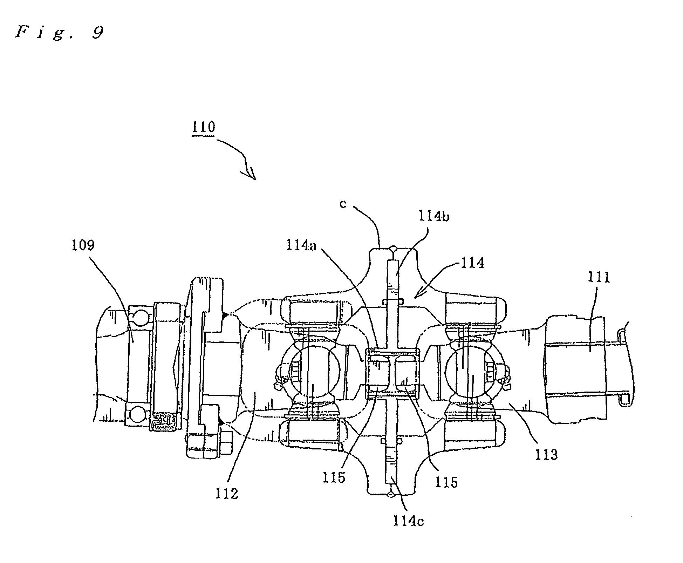

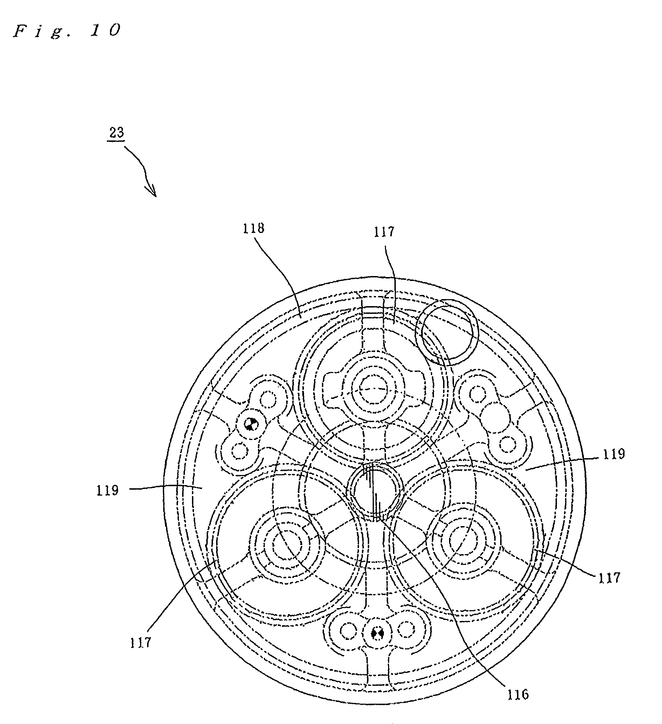

Next, the explanation on the specific construction will be made concerning the right and left front wheels being characteristic of the present invention, which are capable of steering and can be separately swung in the vertical direction of the vehicle. Fig. 5 is a front elevation view showing a suspension between the right and left front wheels. Fig. 6 is a plan view showing a suspension between the right and left front wheels. Fig. 7 is an enlarged perspective view looking at a suspension of the right front wheel from its bottom. Fig. 8 is a front elevation schematic view showing the periphery of a suspension of the left front wheel. Fig. 9 is a front elevation perspective view showing the inner construction of a bent member in an enlarged manner. Fig. 10 is a side-elevation schematic view showing the construction in a supporting case.

Double wishbone type suspensions 100 provided at the front wheels 23 are mounted, as shown in Figs. 5 to 7, symmetrically from the front axle case 19 provided adjacent to the center of a vehicle, to the right and left front wheels 23. And, suspension arms 105a and 105b (double wishbone) having an approximate U-shape (not limited) in planar view, shown in Fig. 6, are attached so as to be allowed to rotate freely in the upward and downward directions of a vehicle, respectively between rotation shafts 102a and 102b which are mounted so as to rotate universally in the clockwise/counterclockwise directions in front view, at the upper and lower parts of this front wheel drive shaft 101, and at the upper and lower ends of the right and left ends of a front axle case 19, with having the shaft center in the forward and backward directions of a vehicle, and stays 104a and 104b protruded to the inside direction from the upper and lower ends of a steering knuckle 104 of the right and left front wheels. It should be note that, a fork side of the suspension arms 105a and 105b is attached with the rotation shafts 102a and 102b.

In addition, as shown in Figs. 7 and 8, though the outer ends of the right and left suspension arms 105a and 105b, and the inner ends of stays 104a and 104b protrusively mounted from the steering knuckle 104, are connected by spherical joints 106a and 106b, by penetrating the stays 104a and 104b with a fixing part 107a such as a screw, provided at the lower part of these spherical joints 106a and 106b and fastening an attaching member 107b such as a nut with sandwiching the stays 104a and 104b from the fixing part 107a, the spherical joints 106a and 106b are detachably mounted on the suspension arms 105a and 105b and the stays 104a and 104b. It should be noted that, a reference numeral 99 (not shown in Figs. 6 and 7) shown in Fig. 5 is a hydraulic cylinder functioning as an elastic body of a suspension 100.

Next, the front wheel drive shaft 101 protruded to the right and left directions from the front axle case 19, is first connected, as shown in Fig. 8, with the inner end of a universal shaft coupling 108 which is located on the extension line of the front wheel drive shaft 101, and mounted adjacent to the inner side of a vehicle, and rotates universally so as to enable to transmit the direction of power transmission of the front wheel drive shaft 101 to the upper and lower directions of a vehicle, and an intermediate shaft 109 is connected with the outer end of this universal shaft coupling 108.

Next, the intermediate shaft 109 is connected with the inner end of a bent member 110 being a universal shaft coupling 110, which is located on the extension line of the intermediate shaft 109, and mounted adjacent to the outer side of a vehicle, and rotates universally so as to enable to transmit the direction of power transmission of the intermediate shaft 109 to the right and left directions of a vehicle, and a transmission shaft 111 is connected with the outer end of the bent member 110. Thus, the front wheel drive shaft 101 is constructed by the front wheel drive shaft 101 sandwiching the universal shaft couplings 108 and 110, the intermediate shaft 109 and the transmission shaft 111.

In this bent member 110, as shown in Fig.9, a supporting part 114 is mounted between an arm 112 which is located adjacent to the centre of the inside and is coordinated with the intermediate shaft 109, and an arm 113 which is coordinated with the transmission shaft 111. In this supporting part 114, the ends of stays 114b and 114c are attached, through an elastic member 115 being composed of rubber, plastic and the like (not specifically limited, but any material which prevents metallic contact is acceptable) attached to the arms 112 and 113, to the upper and lower positions of a cylinder part 114a ( if the inside is cylindrical, then outside shape is not limited) which is mounted so as to cover the outer periphery of shafts 112 and 113, and has a cylindrical hollow inside, and the other ends of these stays 114b and the 114c are fixedly mounted at the upper end and the lower end adjacent to the center in a case c of the bent member 110.

Next, a sun gear 116 shown in Fig. 10 is fixedly set up at the center part of a supporting case 103 of the right and left front wheels 23, and planetary gears 117 are fixedly set up at the outside periphery of this sun gear 116, so as to engage with the sun gear 116, and further a ring gear 118 is fixedly set up at the outside periphery of the planetary gears 117 so as to engage with the planetary gears 117. And, the outer end of the transmission shaft 111 is connected with the sun gear 116. It should be noted that, in addition to the above described construction, in the inner center part of the supporting case 103 of the right and left front wheels 23, the front wheels 23 may be driven by the rotation of this transmission shaft 111 through the supporting case and the like, by directly attaching by fitting, the transmission shaft 111 on the inner center part of the supporting case provided inside the front wheel 23.

Here, first, in the case that the force in the upward direction or the downward direction is added to the front wheel 23 while a vehicle is travelling, according to road surface conditions including irregularities and obstacles on a farm field, a road and the like, the direction of transmission of the driving force is changed so that a part between the right/left front wheel drive shaft 101 and the intermediate shaft 109 is bent in the upward direction or the downward direction respectively at the right and left universal shaft couplings 108, and the power is transmitted from the front wheel shaft 101 to the intermediate shaft 109 by a conventional method.

Consequently, since it is possible to keep a vehicle horizontally without a vehicle inclines because the suspension arms 105a and 105b are swung in the upward direction or the downward direction by the rotation of the rotation shafts 102a and 102b, and the right and left front wheels 23 swing separately and in the same direction (the upward direction or the downward direction) through the spherical joints 106a and 106b at the outer end of the suspension arms 105a and 105b, in addition to the enhancement of stable travelling and safety, it is possible to achieve stable high-speed travelling.

Next, in the case of turning a vehicle, a link member 119 such as a rod coordinated with the steering handle wheel 29 shown in Figs. 6 and 7, is connected with a steering knuckle 104 of the right and left front wheels 23, and by sliding (which is well known, therefore the detailed explanation is omitted) the link member 119 with turning operation of the steering wheel 29, the right and left front wheels 23 are rotated in the right and left directions. On this occasion, while the outer part of each of the right and left intermediate shafts 109 and the inner part of the transmission shaft 111 transmit the power in the right direction or the left direction from the intermediate shaft 109 to the transmission shaft 111 in a conventional method, respectively by the right and left bent members 110 provided between the intermediate shaft 109 and the transmission shaft 111, the direction of transmission can be changed. It should be noted that, following a maximum turning angle 55 degree of the right and left front wheels 23 by the steering wheel 29, the bending angle between the intermediate shaft 109 and the transmission shaft 111 is allowed up to 55 degree by the bent member 110.

In this time, respectively the front wheel drive shaft 101 is supported by the front wheel transmission shaft 89, the differential device 97 and the like, the transmission shaft 111 is supported by the sun gears 116, the supporting case 103 and the like, and in the intermediate shaft 109 , by sandwiching the arm 112 coordinated with the outer end by the supporting part 14 being housed in the bent member 110, between the arms 113 coordinated with the transmission shaft 111, the intermediate shaft 109 is supported by the supporting part 114 . Hence, because it is not necessary to provide differently a supporting member for supporting the intermediate shaft 109 in a small space as in such the suspension 100, the suspension 100 can be a simple construction and it is possible to enhance the workability of assembling and maintenance.

Next, in the same way as above-described, in the case of the maintenance of the inside of the suspension 100 with a complicated construction including the suspension arms 105a and 105b and the front wheel drive shaft 101, in the spherical joints 106a and 106b which connect the outer end of the suspension arms 105a and 105b, and the inner end of the stays 104a and 104b protruded from the supporting case 103 of the right front wheel 23 so as to allow to swing in the vertical direction, it is possible to enhance the workability of assembling and maintenance because separation of the suspension arms 105a and 105b from the stays 104a and 104b is possible by uncoupling the attaching member 108 of the fixing part 107 during maintenance of a vehicle, and the like.

Furthermore, it is possible to change this king pin angle easily by which it is possible to adjust the extent of stability of steering operation, resilience to the state of travelling in a straight line, and absorbing shocks from a road because the inclination angle (king pin angle) to the vertical direction in the vicinity of a fixedly-mounting part 103a of the supporting case 103 in the stays 104a and 104b, is changed by changing the tightening extent of the attaching member 107b at the fixing part 107a, and the workability can be enhanced.

And, since the suspension arms 105a and 105b of the present invention are excellent in strength and design of the suspension arms 105a and 105b because of a crescent shape with an approximate U-shape in planar view, and more resistant to breakage compared with a conventional suspension arm, and condition confirmation and maintenance of the front wheel drive shaft 101, the intermediate shaft 109, the universal shaft joint 108 and the like, can be done easily from a space of a concave part adjacent to the center in planar view, workability can be enhanced

Furthermore, the driving force from the engine 40 can be effectively transmitted to the front wheels 23 by directly connecting the front wheel drive shaft 101 with the front wheels 23 through the intermediate shaft 109 and the transmission shaft 111, and each of gears 117 and 118 is sequentially rotated by rotating the sun gear 116 and the weighty front wheels 23 of a vehicle can be driven more effectively.

In addition, because a planetary carrier 119 supporting these planetary gears 117 is fixed on the supporting case 103, and the planetary gears 117 are supported by the planetary carrier 119 and the supporting case 103, it is not necessary to differently mount a supporting member for supporting the planetary gears 117 and the planetary gears 117 are securely supported, and the rotation of the planetary gears 117 can be kept stable.

In addition, in an example described above, although the explanation has been made on a wheel type tractor (a farm working vehicle) as one example of a work vehicle, the present invention is not limited thereto and can be applied to a semi-crawler type tractor provided with the right and left front wheels, a rice planting machine, a power tiller and the like as a farm working vehicle, a tractor shovel, a motor grader, a scraper, a trencher and the like as a construction work vehicle and every type of a work vehicle provided with suspensions at the right and left front wheels.

## Claims

1. A work vehicle comprising the front wheels being rotated by front wheel drive shafts which are protrusively mounted from the inside of a front axle case in the front part of the vehicle to the right and the left and interposed the universal shaft couplings respectively adjacent to the outer side and the inner side of the vehicle,
and
the upper and lower suspension arms, which are located respectively between said front wheel and said front axle case and support so as to enable said front wheels mounted at the upper side and at the lower side of said front wheel drive shaft to swing in the vertical direction of the vehicle, **characterized in that,**
said front wheel drive shaft is connected with sun gears disposed at the center of said front wheels;
said front wheels are rotated by rotating a ring gear disposed on the outer periphery of planetary gears through a plural of planetary gears disposed on the outer periphery of said sun gears; as well as
stays provided at the upper end and the lower ends of a steering knuckle of said front wheel are connected respectively with the outer ends of said upper and lower suspension arms through spherical joints; and
said front wheels are so provided that said front wheels are capable of steering and can be separately swung in the vertical direction of the vehicle.

2. The work vehicle according to claim 1, **characterized in that** said universal shaft coupling mounted adjacent to the outer side of said vehicle is composed of a bent member with a supporting part built in.

3. The work vehicle according to claim 1, **characterized in that** said spherical joint is detachably provided.
